Europäisches Patentamt

European Patent Office

Office européen des brevets

(11) Publication number: **0 346 506**
**A1**

## (12) EUROPEAN PATENT APPLICATION

(21) Application number: **88109464.3**

(22) Date of filing: **14.06.88**

(51) Int. Cl.⁴: **C07F 7/22**

(43) Date of publication of application:
**20.12.89 Bulletin 89/51**

(84) Designated Contracting States:
**CH DE ES FR GB IT LI NL**

(71) Applicant: **Yoshitomi Pharmaceutical Industries, Ltd.**
**35 Hiranomachi 3-chome Higashi-ku Osaka-shi Osaka 541(JP)**

Applicant: **M & T YOSHITOMI CHEMICALS, LTD.**
**35 Hiranomachi 3-chome Higashi-ku Osaka 541(JP)**

(72) Inventor: **Kiyama, Aiichiro**
**3, Okidaimahi 2-chome**
**Nakatsu-shi Oita 871(JP)**
Inventor: **Kawaguchi, Hitoshi**
**334, Oaza-Koinumaru Yoshitomimachi**
**Chikujo-gun Fukuoka 871(JP)**
Inventor: **Nakajima, Yoshikazu**
**5-10, Chuomachi 2-chome**
**Nakatsu-shi Oita 871(JP)**

(74) Representative: **von Kreisler, Alek, Dipl.-Chem. et al**
**Patentanwälte Von Kreisler-Selting-Werner**
**Deichmannhaus am Hauptbahnhof**
**D-5000 Köln 1(DE)**

(54) Process for the fractional production of organotin compounds.

(57) A process for the fractional production of mono-, di- or triorganotin oxides which comprises subjecting an organotin halide to hydrolysis, separating the hydrolysis reaction mixture into three layers, and thereby obtaining the desired organotin oxide-containing layer as a triorganotin oxide-containing layer substantially free of mono- and/or diorganotin oxide, a monoorganotin oxide-containing aqueous layer, or a diorganotin oxide-containing layer substantially free of mono- and/or triorganotin oxide, and then recovering the tri-, mono- or diorganotin oxides from the desired organotin oxide-containing layers.

## PROCESS FOR THE FRACTIONAL PRODUCTION OF ORGANOTIN COMPOUNDS

This invention relates to a process for producing mono-, di-or triorganotin oxides which are industrially useful.

Mono- and diorganotin oxides are industrially of great value and are used in large quantities as raw materials for the production of stabilizers for polyvinyl chloride resins, as catalysts for organic syntheses, as catalysts for cationic electrodeposition coating, whereas triorganotin oxides hold an important position in the fields of agrochemicals and antifouling paints.

So far, these organotin oxides have been produced generally by hydrolyzing an organotin halide with a strongly basic substance, such as an alkali metal hydroxide or alkaline earth metal hydroxide in aqueous solution, or ammonium hydroxide, in the presence of an organic solvent and recovering the product organotin oxide from the reaction mixture by mechanical means, such as filtration or centrifugation.

However, such production process fails to give the desired compounds in high purity or quality and in high yields but rather poses grave problems from the occupational safety and health viewpoint, as mentioned below. Thus, the organotin halides, which are starting materials, generally contain undesired other organotin halides in amounts up to about 10% by weight. For example, a triorganotin halide contains a diorganotin dihalide and/or monoorganotin trihalide, and a diorganotin dihalide contains a monoorganotin trihalide and/or a triorganotin halide. Therefore, the hydrolysis products necessarily contain organotin oxides other than the desired products. For example, when a triorganotin oxide is the desired product, the corresponding diorganotin oxide and/or monoorganotin oxide are formed as byproducts. When a diorganotin oxide is the desired product, the corresponding triorganotin oxide and/or monoorganotin oxide are formed as byproducts. For removing these byproducts, such means of separation as filtration or centrifugation is required. In the production of a triorganotin oxide, however, there is formed the corresponding diorganotin oxide as a byproduct in the form of very minute particles suspended in the liquid triorganotin oxide. Therefore, the use of a filter aid, such as acid clay, is required for the removal of said minute diorganotin oxide particles and, at the same time, the space of the production plant as a whole is increased to a considerable extent, which is uneconomical. Furthermore, even such filtration procedure hardly results in complete removal of the byproduct diorganotin oxide. It has thus been very difficult to obtain high-quality triorganotin oxides. In addition, the organotin oxide separated as a mixture with the filter aid cannot be reused any longer. Disposal of such mixture as an industrial waste is difficult. It is also difficult to separate the monoorganotin oxide-containing aqueous layer formed in the hydrolysis step from the triorganotin oxide layer and, therefore, it is necessary to carry out extraction of the organotin compounds in the suspended fine particle from with an organic solvent, treatment of the residual liquor with active carbon and further treatment of the same for rendering it unhazardous prior to discharge. Still further, from the occupational safety and health viewpoint, contact of the human body with triorganotin oxides should desirably be avoided as far as possible since their influence on humans is not always so weak as can be regarded as negligible. In the conventional processes, workers are forced to wear appropriate protective clothing and other safeguards and work in a tightly closed room provided with an apparatus for treating the exhaust air with an adsorbent such as active carbon. However, even when such measures are taken, it is difficult to avoid that contact with organotin compounds which poses a serious problem from the safety management standpoint.

In the case of di- or monoorganotin oxides, the conventional production processes have, in principle, the same difficulties as mentioned above for the case of triorganotin oxides and, in addition, the situation becomes more complicated than the case of triorganotin oxides since solids are processed in large quantities. More particularly, the hydrolysis of a diorganotin dihalide is unavoidably accompanied by the formation of the corresponding tri- and/or monoorganotin oxides as byproducts. For removing these byproducts, it is necessary to wash the reaction product with a large quantity of an organic solvent and a large quantity of water, each time followed by separation by such means as filtration or centrifugation. Furthermore, in cases where the hydrolysis is performed by adding a sparingly water-soluble organic solvent, the reaction mixture consists of two layers, namely a monoorganotin oxide-containing aqueous layer and a tri-and diorganotin oxide-containing organic layer. The byproduct triorganotin oxide can be removed from the desired diorganotin oxide by separating the diorganotin oxide in a crude form from the organic layer by centrifugation, filtration or the like means, suspending, for washing the thus-obtained diorganotin oxide in a solvent, then recovering the same by filtration or centrifugation and repeating this procedure of suspending and recovering several times. On the other hand, however, for complete removal of the byproduct salt and alkali metal salt of monoorganotin oxide or the basic substance used for the hydrolysis, it is necessary to wash the diorganotin oxide obtained in the above manner several times with a large quantity of water by suspending said oxide in water, each time followed by separation by mechanical means such as filtration or centrifugation. In cases where the hydrolysis is performed in the presence of a water-soluble organic solvent, most of the diorganotin oxide precipitates as crystals in the reaction mixture while other byproducts remain in the mother liquor layer in a completely dissolved state. This reaction mixture is subjected to separation by mechanical means such as filtration or centrifuga tion. For complete removal, from the crystals, of the alkali metal salts of monoorganotin oxides and/or triorganotin oxides originating from the raw material, it is necessary to wash the crystals several times with a large quantity of a solvent by suspending them in the solvent, each time followed by separation by such means as filtration or centrifugation. Furthermore, for complete removal of the byproduct salt and the basic substance used for the hydrolysis, it is necessary to wash the crystals again several times with a large quantity of water by suspending them in water, each time followed by separation by mechanical means such as filtration or centrifugation.

As a result of years of their intensive investigations made in an attempt to overcome all the above-mentioned difficulties encountered in the prior art processes, the present inventors succeeded in establishing a method of separating the reaction mixture resulting from hydrolysis of an organotin halide into three layers and thereby obtaining the desired organotin oxide-containing layer as a triorganotin oxide-containing layer substantially free of the corresponding mono- and/or diorganotin oxide, a monoorganotin oxide-containing aqueous layer (Generally, the monoorganotin oxide is named as the monoorganic stannoic acid, too, and is dissolved in the form of an alkali metal salt of the monoorganic stannoic acid in water. Such aqueous layer is referred to as "the monoorganotin oxide-containing aqueous layer" through the specification inclusive of claims.) or an diorganotin oxide-containing layer substantially free of the corresponding mono- and/or triorganotin oxide in a fluid state.

The basic features of the invention are (1) to cause the hydrolysis reaction mixture to separate into three layers, (2) to add to the hydrolysis reaction mixture at least one member of the class consisting of water, a basic substance, a salt and a sparingly water-soluble organic solvent to thereby cause said reaction mixture to separate into three layers, (3) to cause the hydrolysis reaction mixture to separate into three layers by making use of the specific gravity differences among them and (4) to cause the hydrolysis reaction mixture to separate into three layers, recovering one or two organotin oxide species from the corresponding layer or layers, converting the other organotin oxide species recovered from the corresponding layer or layers to a halide form and recycling the thus-obtained organotin halide to the hydrolysis step.

Thus the invention relates to:

(1) A process for the fractional production of mono-, di-or triorganotin oxides which comprises subjecting an organotin halide to hydrolysis, separating the hydrolysis reaction mixture into three layers, and thereby obtaining the desired organotin oxide-containing layer as a triorganotin oxide-containing layer substantially free of mono- and/or diorganotin oxide, a monoorganotin oxide-containing aqueous layer, or a diorganotin oxide-containing layer substantially free of mono- and/or triorganotin oxide, and then recovering the tri-, mono- or diorganotin oxides from the desired organotin oxide-containing layers;

(2) A process for the fractional production of mono-, di or triorganotin oxides which comprises subjecting an organotin halide to hydrolysis, adding at least one member of the class consisting of water, a basic substance, a salt and a sparingly water-soluble organic solvent to the hydrolysis reaction mixture to separate said reaction mixture into three layers, and thereby obtaining the desired organotin oxide-containing layer as a triorganotin oxide-containing layer substantially free of mono- and/or diorganotin oxide, a monoorganotin oxide-containing aqueous layer, or a diorganotin oxide layer substantially free of mono- and/or triorganotin oxide, and recovering the tri-, mono- or diorganotin oxides from the desired organotin oxide-containing layers;

(3) A process for the fractional production of mono-, di- or triorganotin oxides which comprises subjecting an organotin halide to hydrolysis, causing the particle size of the diorganotin oxide in the hydrolysis reaction mixture to increase, and separating said reaction mixture into three layers, and thereby obtaining the desired organotin oxide-containing layer as a triorganotin oxide-containing layer substantially free of mono- and/or diorganotin oxide, a monoorganotin oxide-containing aqueous layer, or a diorganotin oxide- containing layer substantially free of mono- and/or triorganotin oxide, by virtue of the difference in specific gravity as resulting between said diorganotin oxide-containing layer on one hand and the triorganotin oxide-containing layer and/or the monoorganotin oxide-containing aqueous layer on the other and recovering the tri-, mono- or diorganotin oxides from the desired organotin oxide-containing layers; and

(4) A process for the fractional production of mono-, di- or triorganotin oxides which comprises subjecting an organotin halide to hydrolysis, separating the hydrolysis reaction mixture into three layers, and thereby obtaining the desired organotin oxide-containing layer as a triorganotin oxide-containing layer substantially free of mono- and/or diorganotin oxide, a monoorganotin oxide-containing aqueous layer, or a diorganotin oxide-containing layer substantially free of mono- and/or triorganotin oxide, recovering the tri-, mono- or diorganotin oxides from the desired organotin oxide-containing layers, and converting one or two of the organotin oxides thus recovered to a halide form suitable for recycling to the step of hydrolysis.

The organotin oxides producible by the process of this invention are monoorganotin oxides, and/or diorganotin oxides and/or triorganotin oxides, and, depending on the reaction conditions and so forth, one, two or three species can be obtained in high purity and high quality. Examples of the monoorganotin oxides are monoalkyltin oxides and examples of the diorganotin oxides are dialkyltin oxides, where the term "alkyl" refers to an alkyl group containing 1-8 carbon atoms, such as methyl, ethyl, n-propyl, isopropyl, n-butyl, sec-butyl, tert-butyl, pentyl, isopentyl, neopentyl, n-hexyl, n-heptyl, n-octyl, 2-ethylhexyl or 1,1,3,3-tetramethyl-butyl. Those mono- and dialkyltin oxides in which the alkyl group is butyl, octyl or the like, such as mono-n-butyltin oxide, di-n-butyltin oxide and di-n-octyltin oxide, are of industrial importance, among others.

As the triorganotin oxides, there may be mentioned bis(trialkyltin) oxides (the term "alkyl", as mentioned above, referring to an alkyl group containing 1-8 carbon atoms), tricycloalkyltin hydroxides (e.g. tricyclohexyltin hydroxide), triaryltin hydroxides [e.g. triphenyltin hydroxide, tris-(substituted phenyl)tin hydroxides] and triaralkyltin hydroxides (e.g. tribenzyltin hydroxide, triphenethyltin hydroxide, trineophyltin oxide). Among them, bis(tributyltin) oxide is of particular industrial importance.

The organotin halide to be used as the starting material is one corresponding to the main desired products and having the general formula

$$R_mSnX_{4-m} \qquad (I)$$

wherein R is an alkyl group containing 1-8 carbon atoms, a cycloalkyl group, an aryl group or an aralkyl group (examples of each group being as given above), X is a halogen atom (chlorine, bromine, iodine) and m is an integer of 1-3. Said halide thus includes, but is not limited to, tri-n-butyltin chloride, di-n-butyltin dibromide, mono-n-butyltin triiodide, monophenyltin trichloride, di-n-octyltin diiodide, tricyclohexyltin bromide, trineophyltin chloride and dimethyltin dichloride. Such organotin halide generally contains other organotin halides. Generally, the content of said other organotin halides should preferably be about 10% by weight or less, although said content may exceed 10% provided that the presence of said other organotin halides will not inhibit or disturb the hydrolysis reaction. In other words, any starting material organotin halide having a purity of about 90% or more, can generally be used to give the desired results.

The basic substance or salt to be added to the hydrolysis reaction mixture in accordance with the invention is an alkali metal hydroxide, an alkaline earth metal hydroxide, ammonium hydroxide, or a salt of such with an inorganic acid, and includes, but is not limited to, sodium hydroxide, potassium hydroxide, ammonium hydroxide, magnesium hydroxide, calcium hydroxide, barium hydroxide, sodium chloride, potassium chloride, sodium bromide, potassium bromide, sodium iodide, sodium carbonate, potassium carbonate, sodium hydrogen carbonate, potassium iodide, sodium sulfate, sodium acetate, ammonium sulfate, potassium acetate, ammonium chloride, sodium nitrate, calcium chloride, calcium iodide, calcium bromide, calcium carbonate, magnesium chloride, magnesium carbonate, magnesium iodide, magnesium sulfate, magnesium acetate and magnesium nitrate. Preferred among them are sodium hydroxide, potassium hydroxide, ammonium hydroxide, sodium chloride and potassium chloride.

The sparingly water-soluble organic solvent, when added to the hydrolysis reaction mixture, should be capable of causing said mixture to separate into three layers, namely a triorganotin oxide-containing layer substantially free of the corresponding mono- and/or diorganotin oxide, a monoorganotin oxide-containing aqueous layer and a diorganotin oxide-containing layer substantially free of the mono- and/or triorganotin oxide. It includes, but is not limited to, benzene, toluene, xylene, pentane, hexane, isohexane, heptane, octane, isooctane, cyclohexane, methylcyclohexane, methyl isobutyl ketone, petroleum benzine, ligroin, petroleum naphtha, ethylbenzene, diethylbenzene, n-butanol, isobutanol, sec-butanol, tert-butanol, pentanol, isopentanol, hexanol, heptanol, cyclohexanol, benzyl alcohol, carbon tetrachloride, chloroform, trichloroethane, trichloroethylene, tetrachloroethane, monochlorobenzene, dichloroethylene, dichlorobenzene, dichloropropane, butyl chloride and amyl chloride, among others. Preferred among them are heptane, toluene, xylene, n-butanol, tert-butanol and cyclohexanol. These solvents may be used either alone or combinedly in the form of a mixed solvent.

These substances, or water, or mixtures thereof should be added to the hydrolysis reaction mixture in an amount capable of causing distinct phase separation of said reaction mixture into three layers.

The hydrolysis reaction is carried out, as so far known in the art, in the presence of a basic substance such as sodium hydroxide, potassium hydroxide or ammonium hydroxide. For causing the size of the solid diorganotin oxide particles to increase to thereby attain, in accordance with one of the basic aspects of the invention, phase separation into three layers by virtue of the specific gravity differences among the triorganotin oxide-containing layer, diorganotin oxide-containing layer and monoorganotin oxide-containing layer in the reaction mixture, however, the reaction should preferably be carried out for a period shorter than in the prior art, preferably not longer than 3 hours, more preferably not longer than 1 hour. Said reaction is desirably carried out at a temperature of 40-90°C, preferably 50-80°C.

The specific gravities of the aqueous and solvent layers can be adjusted by adding water, the above-mentioned basic substance or salt, or the like to the hydrolysis reaction mixture or by controlling, in advance, the concentration of the basic substance used for the hydrolysis reaction or controlling the level of addition of the solvent. The use of an aqueous solution of sodium hydroxides as the basic substance is most economical and, in that case, the sodium hydroxide concentration may be 1-50% (preferably 5-30%). Specific gravity differences of not less than 0.01, preferably 0.03 to 0.3, should desirably result among the three layers so that distinct separation into three layers can take place.

The triorganotin oxide-containing layer substantially free of mono- and/or diorganotin oxide is formed generally as the uppermost layer, the monoorganotin oxide-containing aqueous layer as the intermediate layer, and the diorganotin oxide layer substantially free of mono- and/or triorganotin oxide-containing as the bottom layer. The boundaries among them are distinct and the layers can be readily separated from one another.

The diorganotin oxide content, which is of particular interest and of critical nature in the art, of the upper triorganotin oxide-containing layer is very slight, namely not more than 5,000 ppm or, in certain cases, not more than 1,000 ppm. Furthermore, since the diorganotin oxide occurs as particles increased in size in accordance with one aspect of the invention, said diorganotin oxide can be removed easily by conventional means of filtration. The alkali metal salt of monoorganotin oxide causes no troubles, since it is soluble in water and, therefore, hardly gets mixed in said triorganotin oxide layer.

The intermediate aqueous layer contains the monoorganotin oxide in the form of an alkali metal salt so that the high-quality monoorganotin oxide can be recovered by precipitation using an acid. In cases the organotin halide as a raw material does not contain a monoorganotin trihalide, according to circumstances, the organotin content of said layer is below the analytical detection limit although said layer contains an unreacted portion of the basic substance, the byproduct inorganic salt and so forth and, therefore, said layer can be subjected directly to biological treatment, followed by discharge as industrial waste water.

The diorganotin oxide, which, as mentioned above, has an increased particle size, falls down in the oil droplet form in the reaction mixture and forms the lowermost layer. Generally, the diorganotin oxide content of said layer should preferably be not less than 20%, more preferably not less than 50%. The diorganotin oxide can be recovered from said layer by washing with an organic solvent or water and removing the organic solvent or the like by such means as drying under reduced pressure.

When a triorganotin oxide is the main desired product to be produced by the fractional production process according to the invention, it is necessary to perform the reaction in a manner such that the formation of the diorganotin oxide, which is the main constituent of the lowest layer, be little. In this case, the diorganotin oxide-containing layer formed may be taken out either after completion of each batchwise reaction operation or after continuous operation of the reaction. The byproduct diorganotin oxide-containing layer thus taken out may contain the triorganotin oxide and can be converted to a diorganotin halide or a diorganotin dihalidetriorganotin halide mixture by treatment by a conventional method with a hydrogen-halide acid such as hydrochloric acid. When such mixture is reacted with the corresponding tetraorganotin oxide, said mixture is wholly converted to the high-quality triorganotin halide form. Therefore, said mixture can be used as a raw material.

In cases where a diorganotin oxide is the desired product to be obtained by the fractional production process according to the invention, the high-quality di-n-butyltin oxide can be obtained by washing the di-n-butyltin oxide-containing bottom layer with water or an organic solvent, and then removing therefrom the organic solvent or the like by means of drying under reduced pressure and so forth, and the triorganotin oxide in a state substantially free of the diorganotin oxide can be recovered from the top triorganotin oxide-containing layer by removing therefrom the organic solvent or the like by direct distillation of said layer.

The process of this invention can be conducted either batchwise or continuously. It is one of the outstanding and particular features of the invention that the process can be operated in a continuous manner.

When the process according to the invention is employed for the hydrolysis of an organotin halide material, the hydrolysis reaction mixture separates into three layers, and thereby the desired organotin oxide-containing layer can distinctly be obtained as a triorganotin oxide-containing layer substantially free of mono- and/or diorganotin oxide, a monoorganotin oxide-containing aqueous layer, or a diorganotin oxide-containing layer substantially free of mono- and/or triorganotin oxide in a fluid state.

For obtaining a reaction mixture capable of separating into three layers as mentioned above, water, a basic substance, a salt, a sparingly water-soluble organic solvent, or a mixture of these is added to the reaction mixture or the hydrolysis reaction conditions (addition level of basic substance, quantity of solvent, reaction time, etc.) are adjusted to control the specific gravities of the respective resultant layers and increase the particle size of the solid diorganotin oxide.

As a result, organotin oxides can be obtained in high purity and high quality and in an easy and simple, safe, and economical manner.

The present invention will be illustrated in more detail by means of the following examples, but the present invention is not limited thereto.

Example 1

A four-necked flask provided with an overflow nozzle opening on the side wall was equipped with a stirrer, a thermometer and a reflux condenser, and 3,850 g of 20% aqueous solution of caustic soda and 1,990 g of tri-n-butyltin chloride containing 4.8% of di-n-butyltin dichloride were continuously fed to the flask with stirring and heating at 50°C to effect the hydrolysis reaction. The reaction mixture effluent from the overflow nozzle opening was led to a separation column, 12.5 cm in diameter and 45 cm in height, and alllowed to stand there.

The particles of di-n-butyltin oxide in the organic layer began to precipitate. They fell through the aqueous layer in an opaque, oil droplet-like form to the bottom layer. After overnight standing, there were three distinct layers, namely a bis(tri-n-butyltin) oxide layer, a salt-containing aqueous layer and a di-n-butyltin oxide-containing layer. The three layers were separated from one another and measured for specific gravity. The specific gravity of the bis(tri-n-butyltin) oxide layer was 1.1, that of the aqueous layer was 1.2 and that of the di-butyltin oxide-containing layer was 1.3.

Dehydration of the uppermost bis(tri-n-butyltin) oxide layer under reduced pressure gave 1,629 g (89.4% yield) of bis(tri-n-butyltin) oxide. Results of analysis showed that it was of high quality, the purity being 98.5% and the content of di-n-butyltin oxide dissolved therein being 500 ppm. No organotin compound was detected in the aqueous layer.

The lowermost di-n-butyltin oxide-containing layer weighed 197 g and occurred as a fluid layer composed of 48% of di-n-butyltin oxide and 52% of bis(tri-n-butyltin) oxide. This layer was subjected to 5-hour chlorination using 345 g of 35% aqueous hydrochloric acid at 50°C. The chlorination product was reacted with 158 g of tetra-n-butyltin in the presence of 7 g of aluminum chloride at 100°C for 5 hours. The thus-obtained tri-n-butyltin chloride weighed 366 g. It had a di-n-butyltin content of 4.2% and was thus suited for use as a raw material. When this was taken into consideration, the total yield amounted to 98.2%.

Example 2

A one-liter four-necked flask was equipped with a stirrer, a thermometer, a reflux condenser and a dropping funnel, and charged with 450 g of 30% aqueous caustic soda. Thereto was added, with stirring and heating at 60°C, 300 g of tri-n-butyltin bromide containing 3.5% of di-n-butyltin dibromide dropwise from the dropping funnel over about 10 minutes, and the hydrolysis reaction was effected at the same temperature for 30 minutes. To the reaction mixture, there was added 260 g of water for specific gravity adjustment. The phenomenon of precipitation took place as in Example 1, and the reaction mixture separated into three distinct layers. The specific gravity of the aqueous layer was measured and found to be 1.25. Thereafter, the uppermost layer was treated in the same manner as in Example 1 to give 224.4 g (92.8% yield) of bis(tri-n-butyltin) oxide. Analysis revealed that this was of high quality, the purity being 98.3% and the content of di-n-butyltin oxide dissolved therein being 300 ppm.

The lowermost layer (12.5 g) was composed of 50% of di- n-butyltin oxide and 50% of bis(tri-n-butyltin) oxide. When treated in the same manner as in Example 1, this gave 23 g of tri-n-butyltin chloride. The total yield amounted to 98.1%.

Example 3

The same apparatus as used in Example 2 was charged with 220 g of 20% aqueous caustic soda. Thereto was added, with stirring and heating at 70°C, 200 g of tri-n-octyltin iodide containing 6% of di-n-octyltin diiodide dropwise from the dropping funnel over about 5 minutes and, then, the hydrolysis reaction was conducted at the same temperature for 30 minutes. To the reaction mixture, there were added 50 g of toluene and 148 g of water for specific gravity adjustment. As a result, the phenomenon of precipitation took place as in Example 1, and the reaction mixture separated into three distinct layers. Thereafter, the toluene was distilled off from the top layer by a conventional procedure, whereby 141.0 g (88.5% yield) of bis(tri-n-octyltin) oxide was obtained. Analysis revealed that this was of high quality, namely 98.1% pure.

Example 4

The same apparatus as used in Example 2 was charged with 320 g of 30% aqueous caustic soda. Thereto was added, with stirring and heating at 60°C, a solution of 300 g of triphenyltin chloride containing 2.6% of diphenyltin dichloride in 225 g of methyl isobutyl ketone dropwise from the dropping funnel over about 5 minutes, and the hydrolysis reaction was performed at that temperature for 1 hour. To the reaction mixture, there was added 195 g of water for specific gravity adjustment. As a result, the phenomenon of precipitation took place as in Example 1, and the reaction mixture separated into three distinct layers. Thereafter, the methyl isobutyl ketone was distilled off from the top layer by a conventional procedure to give 269.1 g (94.1% yield) of triphenyltin hydroxide. Analysis revealed that this was of high quality, namely 98.1% pure.

Example 5

The same apparatus as used in Example 2 was charged with 1,030 g of 15% aqueous caustic soda. Thereto was added, with stirring and heating at 80°C, a solution of 400 g of tricyclohexyltin bromide containing 3% of dicyclohexyltin dibromide in 350 g of cyclohexane dropwise from the dropping funnel over about 10 minutes, and the hydrolysis reaction was conducted at that temperature for 1 hour. To the reaction mixture was added 63 g of sodium chloride for specific gravity adjustment. The same phenomenon of precipitation as in Example 1 took place and the reaction mixture separated into three distinct layers. Removal of the cyclohexane from the top layer by a conventional distillation procedure gave 322 g (93.7% yield) of tricyclohexyltin hydroxide. Analysis revealed that this product was of high quality, namely 97.8% pure.

Example 6

A one-liter four-necked flask was equipped with a stirrer, a thermometer, a reflux condenser and a dropping funnel, and was charged with 215 g of 30% aqueous caustic potash. Thereto was added, with stirring and heating at 80°C, a solution of 150 g of di-n-butyltin dibromide containing 1.8% of tri-n-butyltin bromide and 1.5% of mono-n-butyltin tribromide in 150 g of cyclohexanol dropwise from the dropping funnel over about 1 hour and, then, the hydrolysis reaction was conducted at that temperature for 30 minutes. After addition of 250 g of water for specific gravity adjustment, the reaction mixture was allowed to stand.

The particles of di-n-butyltin oxide in the uppermost layer began to precipitate. They fell further through the aqueous layer in the form of opaque oil droplets to the bottom layer. Overnight standing resulted in separation into three distinct layers, namely a cyclohexanol layer containing bis(tri-n-butyltin) oxide, an aqueous layer containing mono-n-butyltin oxide, and a di-n-butyltin oxide-containing layer. These three layers were separated from one another and measured for specific gravity. The specific gravity of the cyclohexanol layer was 0.97, that of the aqueous layer was 1.12 and that of the di-n-butyltin oxide layer was 1.22.

The di-n-butyltin oxide-containing bottom layer weighed 175 g and was a fluid layer composed of 52% of di-n-butyltin oxide and 48% of cyclohexanol. Water (450 g) and 50 g of cyclohexanol were added and washing with water and extraction were conducted. Drying of the di-n-butyltin oxide layer under reduced pressure gave 91.0 g (95.7% yield) of di-n- butyltin oxide as a powder. Analysis of this powder revealed that it had a tin content of 47.80% (theoretical value 47.75%), a halogen content of less than 100 ppm, and a total content of the impurities tri- and mono-n-butyltin oxides of 1,500 ppm.

Removal of the cyclohexanol from the uppermost layer by distillation gave 2.1 g of bis(tri-n-butyltin) oxide, which was 92.6% pure. The mono-n-butyltin oxide-containing aqueous layer was treated with carbon dioxide gas for neutralization, and the resultant white crystalline precipitate was washed with water and dried. Thus was obtained 1.1 g of mono-n-butyltin oxide (96.1% pure).

The Sn-based yield from the starting material was 99.0%.

Example 7

A four-necked flask provided with an overflow nozzle opening on the side wall was equipped with a stirrer, a thermometer and a reflux condenser and, then, 1,300 g of 16% aqueous caustic soda and a solution of 1,912 g of di-n-butyltin dichloride containing 1.5% of tri-n-butyltin chloride and 1.0% of mono-n-butyltin trichloride in 3,592 g of toluene were fed to the flask continuously. The flask contents were stirred and heated at 75°C for effecting hydrolysis. The reaction mixture effluent from the overflow opening was allowed to stand. As a result, there occurred the phenomenon of precipitation as in Example 6 and the reaction mixture separated into three distinct layers. The specific gravity of the aqueous layer was 1.1. Thereafter, the lowermost layer was treated in the same manner as in Example 6, giving 1,520 g (97.0% yield) of di-n butyltin oxide, which was analyzed to have a tin content of 47.72%, a halogen content of less than 100 ppm and a total content of tri- and mono-n-butyltin oxides of 1,200 ppm. Removal of the toluene from the uppermost layer gave 5.9 g of bis(tri-n-butyltin) oxide (95.6% pure). Treatment of the mono-n-butyltin oxide-containing aqueous layer with carbon dioxide gas gave 2.6 g of mono-n-butyltin oxide (95.9% pure).

The Sn-based yield from the starting material was 99.1%.

Example 8

The same apparatus as used in Example 6 was charged with 410 g of 10% aqueous caustic soda. Thereto was added, with stirring and heating at 80°C, 200 g of di-n-octyltin diiodide containing 2.2% of tri-n-octyltin iodide and 1.5% of mono-n-octyltin triiodide dropwise from the dropping funnel over about 5 minutes. The hydrolysis reaction was conducted at that temperature for 30 minutes. To the reaction mixture, there were added 120 g of butanol and 400 g of water for specific gravity adjustment. The same phenomenon of precipitation as in Example 6 took place and the reaction mixture separated into three distinct layers. Thereafter, the lowermost layer was treated in the same manner as in Example 6, giving 115.4 g (96.0% yield) of di-n-octyltin oxide. Analysis revealed that the tin content was 32.85%, the halogen content less than 60 ppm and the total content of tri- and mono-n-octyltin oxide 3,000 ppm.

Example 9

The same apparatus as used in Example 6 was charged with 590 g of 15% aqueous potash. Thereto was added, with stirring and heating at 50°C, a solution of 200 g of di-n-octyltin dichloride containing 1.2% of tri-n-octyltin chloride and 0.9% of mono-n-octyltin trichloride in 180 g of tert-butanol dropwise from the dropping funnel over about 10 minutes, and the hydrolysis reaction was conducted at that temperature for 1 hour. To the reaction mixture was added 290 g of water for specific gravity adjustment. The same precipitation phenomenon as in Example 1 took place and the reaction mixture separated into three distinct layers. Thereafter, the lowermost layer was treated in the same manner as in Example 1 to give 168.0 g 96.8% yield) of di-n-octyltin oxide. The analytical data were as follows: the tin content was 32.93%, the halogen content less than 100 ppm, and the total content of tri- and mono-n-octyltin oxides 2,000 ppm.

Example 10

The same apparatus as used in Example 2 was charged with 450 g of 30% aqueous caustic soda. Thereto was added, with stirring at 30°C, 140 g of mono-n-butyltin trichloride containing 0.8% of di-n-butyltin dichloride and 0.5% of tri-n-butyltin chloride dropwise from the dropping funnel over 10 minutes. The hydrolysis reaction was conducted at that temperature for 30 minutes. To the reaction mixture were added 100 ml of toluene and 500 ml of water. After overnight standing, the reaction mixture separated into three layers, which were separated from one another. The top layer was a toluene layer containing bis(tri-n-butyltin) oxide, the bottom layer was a toluene layer containing di-n-butyltin oxide, and the middle layer was an aqueous layer containing the sodium salt of mono-n-butyltin oxide as dissolved therein. Bis(tri-n-butyltin) oxide and dibutyltin oxide were recovered from the top and bottom layers, respectively, after concentration of the layers by removal of the toluene.

The aqueous layer was neutralized to pH 7 with 30% hydrochloric acid, and the resultant crystalline monobutyltin oxide precipitate was collected, washed with water and dried. The desired product was thus obtained in 97.8% yield.

The present invention has been described in more detail in the specification, particularly in the Disclosure of the Invention; however, this invention may be subjected to various alterations and modifications, as long as its essential or scope is not violated.

**Claims**

1. A process for the fractional production of mono-, di- or triorganotin oxides which comprises subjecting an organotin halide to hydrolysis, separating the hydrolysis reaction mixture into three layers, and thereby obtaining the desired organotin oxide-containing layer as a triorganotin oxide-containing layer substantially free of mono- and/or diorganotin oxide, a monoorganotin oxide-containing aqueous layer, or a diorganotin oxide-containing layer substantially free of mono- and/or triorganotin oxide, and then recovering the tri-, mono- or diorganotin oxides from the desired organotin oxide-containing layers.

2. A process for the fractional production of mono-, di- or triorganotin oxides which comprises subjecting an organotin halide to hydrolysis, adding at least one member of the class consisting of water, a basic substance, a salt and a sparingly water-soluble organic solvent to the hydrolysis reaction mixture to separate said reaction mixture into three layers, and thereby obtaining the desired organotin oxide-containing layer as a triorganotin oxide-containing layer substantially free of mono- and/or diorganotin oxide, a monoorganotin oxide-containing aqueous layer, or a diorganotin oxide layer substantially free of mono- and/or triorganotin oxide, and recovering the tri-, mono- or diorganotin oxides from the desired organotin oxide-containing layers.

3. A process for the fractional production of mono-, di- or triorganotin oxides which comprises subjecting an organotin halide to hydrolysis, causing the particle size of the diorganotin oxide in the hydrolysis reaction mixture to increase, and separating said reaction mixture into three layers and thereby obtaining the desired organotin oxide-containing layer as a triorganotin oxide-containing layer substantially free of mono- and/or diorganotin oxide, a monoorganotin oxide-containing aqueous layer, or a diorganotin oxide-containing layer substantially free of mono- and/or triorganotin oxide, by virtue of the difference in specific gravity as resulting between said diorganotin oxide-containing layer on one hand and the triorganotin oxide-containing layer and/or the monoorganotin oxide-containing aqueous layer on the other and recovering the tri-, mono- or diorganotin oxides from the desired organotin oxide-containing layers.

4. A process for the fractional production of mono-, di- or triorganotin oxides which comprises subjecting an organotin halide to hydrolysis, separating the hydrolysis reaction mixture into three layers, and thereby obtaining the desired organotin oxide-containing layer as a triorganotin oxide-containing layer substantially free of mono- and/or diorganotin oxide, a monoorganotin oxide-containing aqueous layer, or a diorganotin oxide-containing layer substantially free of mono- and/or triorganotin oxide recovering the tri-, mono- or diorganotin oxides from the desired organotin oxide-containing layers, and converting one or two of the organotin oxides thus recovered to a halide form suitable for recycling to the step of hydrolysis.

5. A process as claimed in Claim 1, 2, 3 or 4, wherein said monoorganotin oxide is a monoalkyltin oxide ("alkyl" being $C_{1-8}$ alkyl), said diorganotin oxide is a dialkyltin oxide ("alkyl" being $C_{1-8}$ alkyl) and said triorganotin oxide is a bis(trialkyltin) oxide ("alkyl" being $C_{1-8}$ alkyl), a tricycloalkyltin hydroxide, a triaryltin hydroxide or a triaralkyltin hydroxide.

6. A process as claimed in Claim 1, 2, 3 or 4, wherein said basic substance or salt is an alkali metal hydroxide, an alkaline earth metal hydroxide, ammonium hydroxide, or a salt of an alkali metal hydroxide, an alkaline earth metal hydroxide or ammonium hydroxide with an inorganic acid.

7. A process as claimed in Claim 1, 2, 3 or 4, wherein said sparingly water-soluble organic solvent is a solvent or mixed solvent capable of causing said hydrolysis reaction mixture to separate into three layers.

8. A process as claimed in Claim 1, 2, 3 or 4, wherein said organotin halide is a compound of the general formula

$$R_m SnX_{4-m}$$

wherein R is an alkyl group containing 1-8 carbon atoms, a cycloalkyl group, an aryl group or an aralkyl group, X is a halogen atom and m is an integer of 1 to 3.

9. A process as claimed in Claim 8, wherein said organotin halide may contain another or other organotin halides in an amount in which they are substantially incapable of inhibiting or disturbing the hydrolysis reaction.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-4 174 346 (J.D. COLLINS) * Column 3, line 15 - column 4, line 30 * | 1-9 | C 07 F 7/22 |
| X | US-A-3 390 159 (T. KATSUMURA) * Column 2, line 12 - column 3, line 3; examples * | 1-9 | |
| X | US-A-3 466 311 (Y. MIZUNO) * Examples * | 1-9 | |
| A | FR-A-2 041 467 (KHIMICHESKY ZAVOD IMENI VOIKOVA) * Page 2 * | 1 | |
| A | FR-A-1 515 649 (M. & T CHEMICALS, INC.) * Pages 3-4 * | 1 | |
| A | FR-A-1 170 229 (METAL & THERMIT CORP.) * Page 1, column 2, paragraph 3 - page 2, column 2; examples * | 1 | |

TECHNICAL FIELDS SEARCHED (Int. Cl.4)

C 07 F 7/00

The present search report has been drawn up for all claims

| Place of search | Date of completion of the search | Examiner |
|---|---|---|
| THE HAGUE | 02-03-1989 | PAUWELS G.R.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)